# EUROPEAN PATENT SPECIFICATION

(11) **EP 3 495 203 B1**
(45) Date of publication and mention of the grant of the patent: **02.06.2021**
(21) Application number: 18460020.3
(22) Date of filing: 04.04.2018
(51) Int. Cl.: B60P 7/08

(54) **DOOR BUMPER**
TÜRANSCHLAG
BUTÉE DE PORTE

(30) Priority: 05.12.2017 PL 42374917
(43) Date of publication of application: 12.06.2019
(73) Proprietor: "WIELTON" Spolka Akcyjna, 98-300 Wielun (PL)
(72) Inventor: Gadomski, Radoslaw, 98-320 Osjaków (PL)
(74) Representative: AOMB Polska Sp. z.o.o.

(56) References cited:
- WO-A1-2013/173522
- DE-A1-102009 043 506
- DE-U1-202015 102 315
- US-A- 5 176 347
- US-A1- 2015 117 975
- US-B1- 6 457 701

## Description

The subject of the invention relates to a door bumper that can be connected to various types of cam buckles that tighten the protection straps of trailer tarp in vehicles where this kind of protection and fastening of the tarp has been applied. The developed door bumper protects against damage both, the cam buckle where it has been mounted, and the doors that would hit the cam buckle.

There are many solutions of door bumpers. The description of a Polish utility model, application number W-97541 (date of publication in BUP 1993-11-02) presents a solution entitled "Door bumper". This solution is characteristic in that the door bumper limiting the opening of the door sash and absorbing the shock coming from the impact is a coil spring with a rubber bumper attached on one end and a base on the other end. The bumper is a truncated cone, where the thicker external end is of spherical shape, whereas the base is a round plate, which is cylindrical in the centre and the cylinder's external diameter matches the internal diameter of the coil spring. At the base of the cylinder there is a circumferential groove with semicircular cross-section.

Another Polish invention description, application number P-338764 (date of publication in BUP 2000-09-11) presents a solution entitled "Door opening angle limiter in particular for vehicles doors", The subject of the invention is a door opening angle limiter, in particular for vehicle doors, that is composed of first and second support, one of those is attached to the vehicle body post, and the other one is attached to the doors and to the support arm mounted in a rotational way in the first support, the axis of which is parallel to the door rotation axis. At the free end of the support arm there is at least one roller, while on the second support there is a limiting surface and the rolling surface on respective elements, mounted in a rotational way in relation to one another on the axis parallel to the axis of the roller rotation. The flexible elements are used to keep the elements in relative position, thus preventing disconnection of the roller from the second support.

Another Polish invention description, application number P-336911 (date of publication in BUP 2001-06-04) presents a solution entitled "Hydraulic door opening angle limited integrated with door hinge". The invention concerns a hydraulic mechanism allowing for opening and closing doors, in particular car doors, with the possibility to index the opening in certain positions, the mechanism is equipped with mounting grip and may act as a hinge. The mechanism is composed of a crankcase, shaped as 1/4 sector of a cylinder, the axis of which is crossed with the axis of blade rotation together with connected blade that divides the crankcase in two chambers filled with liquid, maintaining certain clearance to enable movement of the liquid from one chamber to the other during the blade movement, thus providing the effect of shock absorption. The internal surface of the crankcase is equipped with blade sealing areas that block the blade in the indexing position, and the blade is unblocked when the pressure in one of the chambers increases by means of two overflow valves opposing each other, installed on the blade, thus enabling the blade to pass the sealing area and its further movement.

Another Polish invention description, application number 345987 (date of publication in BUP 2002-08-26) presents a solution entitled "Vehicle door opening limiter". The invention is characteristic in that the vehicle door opening limiter is composed of a base, holding a pair of rollers rotating on respective axis parallel in relation to one another, elastically moved towards each other. It is also equipped with a metal stay, having two rolling surfaces located opposite each other, on which the rollers make the movement. Those surfaces create at least one stabilising hollow that connects with one roller, creating a stable position to hold the doors. The stabilising hollow has got an arch-shaped central part, with the curvature radius Ra = (10 to 15)R1, where R1 is the radius of the roller. The hollow has also got a pair of arch-shaped side parts with curvature radius Rb = (1,1 to 1,8)R1, where the axial length of the central part is A = (0,15 to 0,30)R1.

Another Polish invention description, application number P-412601 (date of publication in BUP 2016-12-19) presents a solution entitled "Bump rail with shock absorber". The subject of the invention is a bump rail with shock absorber that limits the opening of a door sash, balcony doors, gate or wicket and absorbs the contact when opening to protect against damage. The protection against damage protects the handle, edges of the wall, door casing or doors installed close to each other. The bump rail with shock absorber is composed of a body with openings, where the shock absorber is mounted, with the purpose of absorbing the impact force of an opening door sash (for example), it is composed of a hexagonal head socket screw or socket wrench screw, where following items have been set: a bumper, washer, spacer sleeve, spring, and a cap nut. The body is equipped with an insert, attached permanently to the internal wall of the body, with a hole in the centre that enables fixing a screw with a head or an anchor bolt. The body is seated on a stabilising base with a bed, with a hole in the centre that enables fixing a screw with a head or an anchor bolt, while in the top part there is a stopper with a tenon.

US2015117975A1 discloses a tie-down apparatus comprising a tie-down device (e.g. ratchet strap or cam buckle strap) and a housing for storing the entire tie-down device. The housing protects load or vehicles from being scratched or damaged by sharp elements of the-down apparatus.

WO2013173522A1 discloses a strap device for securing cargo on a rack of a vehicle, said device comprising a strap, a tensioner and a buckle. Said tensioner and said buckle can be covered in a padding material to protect load and/or a vehicle from being scratched or damaged by metal components of the strap device.

The objective of the invention is to develop such a door bumper that could be mounted onto a cam buckle that tightens the protection straps of a trailer tarp and could protect more effectively the trailer doors against damage during their maximal (full and wider than possible up to date) opening.

According to the present invention there is provided an assembly of a cam buckle for tightening protection straps of a trailer tarp and a door bumper attached to said cam buckle, wherein the body of said door bumper resembles letter "T" in the cross-section and has at least a bumper part to protect the cam buckle from being hit by a trailer door and an attachment part attached to said cam buckle. The bumper part and the attachment part define a space the shape of which fits at least a part of the cam buckle, wherein the bumper part covers at least a part of the cam buckle and protrudes from said cam buckle outwardly as the furthest element intended to be hit first by the trailer door. The attachment part has a cross-wise pass-through hole which is aligned in one axis with a mounting hole made in the cam buckle, whereby there is a connecting element put through the pass-through hole and the mounting hole. Preferably, the pass-through hole made in the attachment part or the mounting hole in the cam buckle is round.

Preferably, the pass-through hole made in the attachment part or the mounting hole in the cam buckle is threaded.

Preferably, the shape of the attachment part is adapted to fit the shape of a top part of one of sides of the cam buckle.

Preferably, the bumper part covers the top part one of the sides of the cam buckle.

Preferably, an arch of the top surface of the bumper part is coaxial with a centre of the pass-through hole.

Preferably, the connecting element put through the pass-through hole and the mounting hole is a screw, or a screw with an additional nut, or equivalent connecting element, preferably a rivet.

Preferably, edges of the door bumper, and at least edges of the bumper part are rounded or possibly bevelled.

Preferably, door bumper, and at least the bumper part are made of plastic material or rubber.

Preferably, on both sides of the attachment part there is made the space, preferably in a symmetrical way.

The solution in accordance with the invention enables wider than possible until now opening of the doors protected with the door bumper. At the same time it provides full protection of the trailer doors against damage during their full opening, preventing the doors from hitting the cam buckle tightening the protection straps of the trailer tarp. Due to the fact that the door bumper is located elsewhere it is possible to flatten significantly the cam buckle to which it has been attached, whereas due to the modification of the shape and dimensions of the door bumper itself the impact force of the opened doors is distributed on a larger door surface, because in the developed solution it is possible to obtain a larger contact surface between the door and the door bumper. As a result, the described elements of a trailer, i.e. the doors and the handles are not damaged when the easily installed solution, in accordance with the invention, is used.

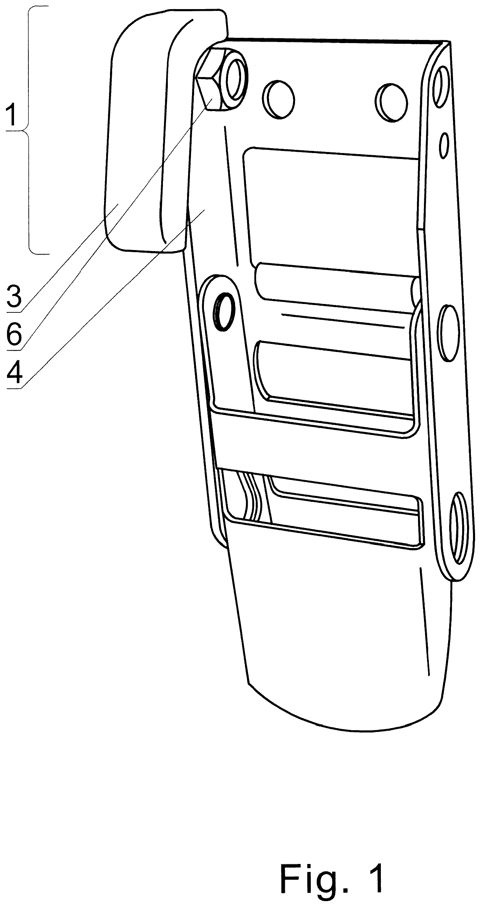

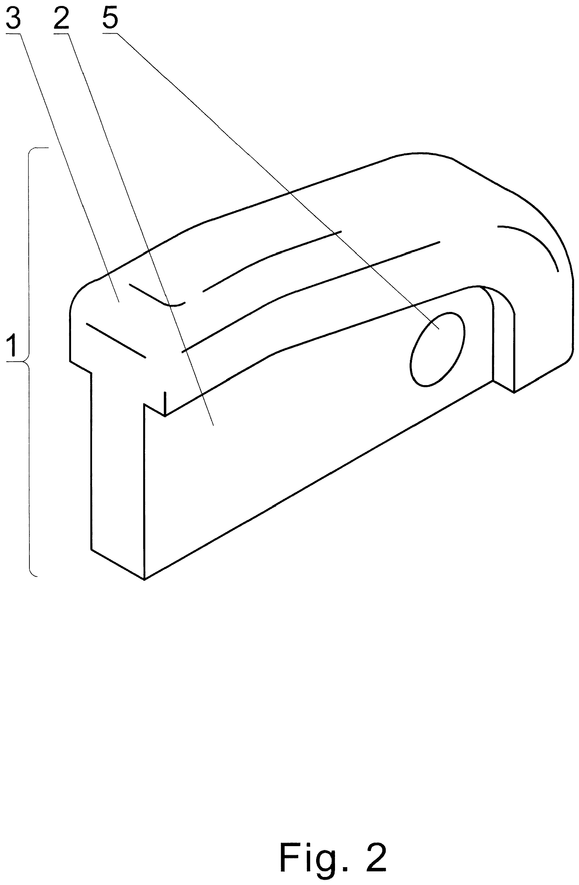

The subject of the invention is presented in detail, as an exemplary embodiment, in the drawings, where fig.1 presents a perspective view of an assembly of a cam buckle tightening protection straps of trailer tarp and a door bumper, while fig.2 presents an axonometric view of a door bumper.

The assembly according to the invention comprises
a door bumper 1 that is basically a monolithic element, usually a cast made of one material, most preferably plastic material or rubber. The door bumper 1 has two spaces, usually symmetrical, one on each side of an attachment part 2, and a bumper part 3 over them. For this reason, the cross-section of the door bumper 2 basically resembles the letter "T". Usually the shape of the space defined by the bumper part 3 and the attachment part 2 is adjusted to fit the top part of the cam buckle 4, which tightens the protection straps of the trailer tarp, in such a way that the bumper part 3 shields the top and, partially, the front of said cam buckle 4. Thus, the bumper part 3 is to some extent drawn over the cam buckle 4 and adjusted to the shape of a universal cam buckle, just as the spaces are adjusted to its shape, thus creating place where the top part of the cam buckle 4 side goes in. The door bumper 1 by means of the bumper part 3 protects the cam buckle 4 which tightens the straps holding the trailer tarp, against hitting while the door are fully open. Simultaneously when the door hits the bumper part 3 of the door bumper 1 it presses on a larger surface, therefore the impact is gentler and not applied to one point only.

In the attachment part 2 a cross-wise pass-through hole 5 is made, which is preferably of round shape and may be threaded, depending on the type of fixing used to attach the attachment part 2 of the door bumper 1 to the cam buckle 4. Usually the arch of the bumper part 3 is coaxial with the centre of the pass-through hole 5.

After placing the attachment part 2 of the door bumper 1 on the cam buckle 4, the pass-through hole 5 is located in one axis with the previously prepared mounting hole in the cam buckle 4. The mounting hole is made to fix the door bumper 1 for example by means of a screw 6, whereas the screw 6 to fix the door bumper to the cam buckle 4 passes both: the mounting hole in the cam buckle 4 and the pass-through hole 5 of the door bumper 1 made cross-wise in the attachment part 2.

The screw 6 may be screwed into the thread of the pass-through hole 5 or in the thread of the mounting hole of the cam buckle 4 if making such threads was anticipated in a given embodiment. In case if there are no such threads, the described elements are usually connected with a screw 6, onto which a nut is screwed, or with an equivalent connecting element, preferably a rivet.

The edges of the door bumper 1, in particular edges of the bumper part 3, are rounded, or possibly bevelled, depending on the selected technology of the door bumper production.

This design of the door bumper 1 is much effective in prevention of damages in the trailer doors and the cam buckle 4 tightening the protection straps of the trailer tarp, thus allowing for wider than before opening of the doors.

### List of elements

1. door bumper
2. attachment part
3. bumper part
4. cam buckle (ratchet)
5. pass-through hole
6. screw

## Claims

1. An assembly of a cam buckle (4) for tightening protection straps of a trailer tarp and a door bumper (1) attached to said cam buckle (4), wherein the body of said door bumper (1) resembles letter "T" in the cross-section and has at least a bumper part (3) to protect the cam buckle (4) from being hit by a trailer door and an attachment part (2) attached to said cam buckle (4), wherein the bumper part (3) and the attachment part (2) define a space the shape of which fits at least a part of the cam buckle (4), wherein the bumper part (3) covers at least a part of the cam buckle (4) and protrudes from said cam buckle (4) outwardly as the furthest element intended to be hit first by the trailer door, wherein the attachment part (2) has a cross-wise pass-through hole (5) which is aligned in one axis with a mounting hole made in the cam buckle (4), whereby there is a connecting element put through the pass-through hole (5) and the mounting hole.

2. The assembly according to claim 1, wherein the pass-through hole (5) made in the attachment part (2) or the mounting hole in the cam buckle (4) is round.

3. The assembly according to claim 1 or 2, wherein the pass-through hole (5) made in the attachment part (2) or the mounting hole in the cam buckle (4) is threaded.

4. The assembly according to claim 1 or 2 or 3, wherein the shape of the attachment part (2) is adapted to fit the shape of a top part of one of sides of the cam buckle (4).

5. The assembly according to claim 1 or 2 or 3 or 4, wherein the bumper part (3) covers the top part of one of the sides of the cam buckle (4).

6. The assembly according to claim 1 or 2 or 3 or 4 or 5, wherein an arch of the top surface of the bumper part (3) is coaxial with a centre of the pass-through hole (5).

7. The assembly according to claim 1 or 2 or 3 or 4 or 5 or 6, wherein the connecting element put through the pass-through hole (5) and the mounting hole is a screw (6) or a screw (6) with an additional nut or equivalent connecting element, preferably a rivet.

8. The assembly according to claim 1 or 2 or 3 or 4 or 5 or 6 or 7, wherein edges of the door bumper (1), and at least edges of the bumper part (3) are rounded or possibly bevelled.

9. The assembly according to claim 1 or 2 or 3 or 4 or 5 or 6 or 7 or 8, wherein the door bumper (1), and at least the bumper part (3) are made of plastic material or rubber.

10. The assembly according to claim 1 or 2 or 3 or 4 or 5 or 6 or 7 or 8 or 9, wherein on both sides of the attachment part (2) the is made the space, preferably in symmetrical way.

## Patentansprüche

1. Baugruppe aus einer Nockenschnalle (4) zum Spannen von Schutzgurten einer Anhängerplane und einem an der Nockenschnalle (4) befestigten Türpuffer (1), wobei der Körper des Türpuffers (1) im Querschnitt dem Buchstaben "T" ähnelt und hat mindestens einen Pufferteil (3), um die Nockenschnalle (4) davor zu schützen, von einer Anhängertür getroffen zu werden, und einen Befestigungsteil (2), der an der Nockenschnalle (4) befestigt ist, aufweist, wobei der Pufferteil (3) und der Befestigungsteil (2) einen Raum definieren, dessen Form zu mindestens einem Teil der Nockenschnalle (4) passt, wobei das Pufferteil (3) mindestens einen Teil der Nockenschnalle (4) abdeckt und von der Nockenschnalle (4) nach außen als das am weitesten entfernte Element, das dazu bestimmt ist, zuerst von der Anhängertür getroffen zu werden, vorsteht, wobei das Befestigungsteil (2) ein quer verlaufendes Durchgangsloch (5) aufweist, das in einer Achse mit einem in der Nockenschnalle (4) hergestellten Montageloch ausgerichtet ist, wodurch ein Verbindungselement durch das Durchgangsloch (5) und das Montageloch gesteckt ist.

2. Baugruppe nach Anspruch 1, wobei das im Befestigungsteil (2) hergestellte Durchgangsloch (5) oder das Montageloch in der Nockenschnalle (4) rund ist.

3. Baugruppe nach Anspruch 1 oder 2, wobei das im Befestigungsteil (2) hergestellte Durchgangsloch (5) oder das Montageloch in der Nockenschnalle (4) mit einem Gewinde versehen ist.

4. Baugruppe nach Anspruch 1 oder 2 oder 3, wobei die Form des Befestigungsteils (2) an die Form eines oberen Teils einer der Seiten der Nockenschnalle (4) angepasst ist.

5. Baugruppe nach Anspruch 1 oder 2 oder 3 oder 4, wobei der Pufferteil (3) den oberen Teil einer der Seiten der Nockenschnalle (4) abdeckt.

6. Baugruppe nach Anspruch 1 oder 2 oder 3 oder 4 oder 5, wobei eine Wölbung der Oberseite des Pufferteils (3) koaxial mit einem Zentrum des Durchgangslochs (5) ist.

7. Baugruppe nach Anspruch 1 oder 2 oder 3 oder 4 oder 5 oder 6, wobei das durch das Durchgangsloch (5) und das Montageloch gesteckte Verbindungselement eine Schraube (6) oder eine Schraube (6) mit einer zusätzlichen Mutter oder ein gleichwertiges Verbindungselement, vorzugsweise ein Niet, ist.

8. Baugruppe nach Anspruch 1 oder 2 oder 3 oder 4 oder 5 oder 6 oder 7, wobei die Kanten des Türpuffer (1) und zumindest die Kanten des Pufferteils (3) abgerundet oder gegebenenfalls abgeschrägt sind.

9. Baugruppe nach Anspruch 1 oder 2 oder 3 oder 4 oder 5 oder 6 oder 7 oder 8, wobei der Türpuffer (1) und zumindest das Pufferteil (3) aus Kunststoff oder Gummi hergestellt sind.

10. Baugruppe nach Anspruch 1 oder 2 oder 3 oder 4 oder 5 oder 6 oder 7 oder 8 oder 9, wobei auf beiden Seiten des Befestigungsteils (2) der Raum, vorzugsweise symmetrisch, ausgebildet ist.

## Revendications

1. Un ensemble d'une boucle à came (4) pour serrer les sangles de protection d'une bâche de remorque et d'un pare-chocs de porte (1) attaché à ladite boucle à came (4), dans lequel le corps dudit pare-chocs de porte (1) ressemble à la lettre "T" dans la section transversale et a au moins une partie de pare-chocs (3) pour protéger la boucle à came (4) contre les coups d'une porte de remorque et une partie de fixation (2) attachée à ladite boucle à came (4), dans lequel la partie de pare-chocs (3) et la partie de fixation (2) définissent un espace dont la forme correspond à au moins une partie de la boucle à came (4), dans lequel la partie de pare-chocs (3) recouvre au moins une partie de la boucle à came (4) et fait saillie de ladite boucle à came (4) vers l'extérieur en tant qu'élément le plus éloigné destiné à être frappé en premier par la porte de remorque, dans lequel la partie de fixation (2) a un trou traversant transversal (5) qui est aligné dans un axe avec un trou de montage réalisé dans la boucle à came (4), grâce à quoi il y a un élément de connexion passant à travers le trou traversant (5) et le trou de montage.

2. L'ensemble selon la revendication 1, dans lequel le trou traversant (5) réalisé dans la partie de fixation (2) ou le trou de montage dans la boucle à came (4) est rond.

3. L'ensemble selon la revendication 1 ou 2, dans lequel le trou traversant (5) réalisé dans la partie de fixation (2) ou le trou de montage dans la boucle à came (4) est fileté.

4. L'ensemble selon la revendication 1 ou 2, ou 3, dans lequel la forme de la partie de fixation (2) est adaptée pour correspondre à la forme d'une partie supérieure de l'un des côtés de la boucle à came (4).

5. L'ensemble selon la revendication 1 ou 2, ou 3, ou 4, dans lequel la partie de pare-chocs (3) recouvre la partie supérieure de l'un des côtés de la boucle à came (4).

6. L'ensemble selon la revendication 1 ou 2, ou 3, ou 4, ou 5, dans lequel une arche de la surface supérieure de la partie de pare-chocs (3) est coaxiale avec un centre du trou traversant (5).

7. L'ensemble selon la revendication 1 ou 2, ou 3, ou 4, ou 5, ou 6, dans lequel l'élément de connexion passé à travers le trou traversant (5) et le trou de montage est une vis (6) ou une vis (6) avec un écrou supplémentaire ou un élément de raccordement équivalent, de préférence un rivet.

8. L'ensemble selon la revendication 1 ou 2, ou 3, ou 4, ou 5, ou 6, ou 7, dans lequel les bords du pare-chocs de porte (1) et au moins les bords de la partie de pare-chocs (3) sont arrondis ou éventuellement biseautés.

9. L'ensemble selon la revendication 1 ou 2, ou 3, ou 4, ou 5, ou 6, ou 7, ou 8, dans lequel le pare-chocs de porte (1) et au moins la partie de pare-chocs (3) sont réalisés en matière plastique ou en caoutchouc.

10. L'ensemble selon la revendication 1 ou 2, ou 3, ou 4, ou 5, ou 6, ou 7, ou 8, ou 9, dans lequel des deux côtés de la partie de fixation (2) est ménagé l'espace, de préférence de manière symétrique.
